# FASCICULE DE BREVET EUROPEEN

(11) **EP 2 807 116 B1**
(45) Date de publication et mention de la délivrance du brevet: **22.04.2020**
(21) Numéro de dépôt: 13700925.4
(22) Date de dépôt: 23.01.2013
(51) Int. Cl.: C01B 33/193

(54) **PROCÉDÉ DE PRÉPARATION DE SILICES PRÉCIPITÉES**
HERSTELLUNGSVERFAHREN FÜR AUSGEFÄLLTE KIESELSÄURE
PRECIPITATED-SILICA PRODUCTION METHOD

(30) Priorité: 25.01.2012 FR 1200214
(43) Date de publication de la demande: 03.12.2014
(73) Titulaire: Rhodia Opérations, 75009 Paris (FR)
(72) Inventeur: ALLAIN, Emmanuelle, F-94240 L'Hay les Roses (FR)
(74) Mandataire: Delenne, Marc
(86) Numéro de dépôt international: PCT/EP2013/051240
(87) Numéro de publication internationale: WO 2013/110659

(56) Documents cités:
- EP-A1- 0 520 862
- EP-A1- 0 754 650
- WO-A1-95/09127
- WO-A1-2010/022544

## Description

La présente invention concerne un nouveau procédé de préparation de silice précipitée.

Il est connu d'employer des silices précipitées comme support de catalyseur, comme absorbant de matières actives (en particulier supports de liquides, par exemple utilisés dans l'alimentation, tels que les vitamines (vitamine E notamment), le chlorure de choline), comme agent viscosant, texturant ou anti-mottant, comme élément pour séparateurs de batteries, comme additif pour dentifrice, pour papier.

On peut également employer des silices précipitées comme charge renforçante dans des matrices silicones (par exemple pour l'enrobage des câbles électriques) ou dans des compositions à base de polymère(s), naturel(s) ou synthétique(s), en particulier d'élastomère(s), notamment diéniques, par exemple pour les semelles de chaussures, les revêtements de sols, les barrières aux gaz, les matériaux ignifugeants et également les pièces techniques telles que les galets de téléphériques, les joints d'appareils électroménagers, les joints de conduites de liquides ou de gaz, les joints de système de freinage, les gaines, les câbles et les courroies de transmissions.

Il est ainsi connu de préparer, en mettant en œuvre une réaction de précipitation entre un silicate et un acide dilué, des silices précipitées utilisables à titre de charge renforçante pour les compositions de polymères, présentant une aptitude à la dispersion (et à la désagglomération) et des propriétés renforçantes très satisfaisantes. Un exemple d'un tel procédé et de telles silices est fourni par EP670813B1.

WO2010/022544A1 décrit un procédé de préparation de silices précipitées dans lequel l'acide utilisé dans la réaction de précipitation est choisi dans le groupe constitué de l'acide sulfurique de concentration comprise entre 90 et 98,5 % en poids, de l'acide chlorhydrique de concentration comprise entre 34 et 42,7 % en poids, de l'acide nitrique de concentration comprise entre 60 et 68 % en poids et de l'acide phosphorique de concentration comprise entre 80 et 100 % en poids.

Le but principal de la présente invention est de proposer un nouveau procédé de préparation de silice précipitée, qui constitue une alternative aux procédés connus de préparation de silice précipitée.

Plus préférentiellement, l'un des buts de la présente invention consiste à fournir un procédé qui, tout en ayant une productivité améliorée, en particulier au niveau de la réaction de précipitation, notamment par rapport aux procédés de l'état de la technique mettant en œuvre à titre d'acide un acide dilué, permet d'obtenir des silices précipitées ayant des caractéristiques physicochimiques et des propriétés comparables, notamment au niveau de leur distribution poreuse, de leur aptitude à la désagglomération et à la dispersion (dispersibilité) dans les compositions de polymère(s) (élastomère(s)) et/ou de leurs propriétés renforçantes, à celles des silices précipitées obtenues par ces procédés de préparation de l'état de la technique.

Un autre but de l'invention consiste préférentiellement, dans le même temps, à réduire la quantité d'énergie consommée et/ou la quantité d'eau employée lors de la préparation de silice précipitée, notamment par rapport aux procédés de l'état de la technique mettant en œuvre à titre d'acide un acide dilué.

Ainsi, l'objet de l'invention est un nouveau procédé de préparation de silice précipitée comprenant la réaction d'un silicate avec au moins un acide ce par quoi l'on obtient une suspension de silice, puis la séparation et le séchage de cette suspension, dans lequel la réaction du silicate avec l'acide est réalisée selon les étapes successives suivantes :
(i) on forme un pied de cuve aqueux initial comportant du silicate de métal alcalin M, la concentration en silicate (exprimée en SiO₂) dudit pied de cuve étant inférieure à 20 g/L, de préférence d'au plus 15 g/L,
(ii) on ajoute de l'acide audit pied de cuve initial, jusqu'à ce qu'au moins 50 % de la quantité de M₂O présente dans le dit pied de cuve initial soient neutralisés,
(iii) on ajoute au milieu réactionnel, simultanément, du silicate de métal alcalin M et de l'acide, de telle manière que le rapport quantité de silicate ajoutée (exprimée en SiO₂) / quantité de silicate présente dans le pied de cuve initial (exprimée en SiO₂) soit supérieur à 4 et d'au plus 100, de préférence soit compris entre 12 et 100, en particulier entre 12 et 50,
(iv) on arrête l'addition du silicate tout en continuant l'addition de l'acide dans le milieu réactionnel jusqu'à l'obtention d'une valeur du pH du milieu réactionnel comprise entre 2,5 et 5,3, de préférence entre 2,8 et 5,2,
procédé dans lequel, dans au moins une partie de l'étape (iii) (c'est-à-dire dans, au minimum, une partie ou la totalité de l'étape (iii)), l'acide utilisé est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

De manière avantageuse, ledit acide concentré est de l'acide sulfurique concentré, c'est-à-dire de l'acide sulfurique présentant une concentration d'au moins 80 % en masse, de préférence d'au moins 90 % en masse.

On peut ainsi utiliser, comme acide concentré, de l'acide sulfurique ayant une concentration d'au moins 1400 g/L, en particulier d'au moins 1650 g/L. Ainsi, selon l'une des caractéristiques essentielles de l'invention, prise en combinaison avec un enchaînement d'étapes aux conditions spécifiques, en particulier une certaine concentration en silicate de métal alcalin, ainsi qu'un rapport de quantité de silicate ajoutée (exprimée en SiO₂) / quantité de silicate présente dans le pied de cuve initial (exprimée en SiO₂) approprié, l'acide utilisé dans une partie de l'étape (iii), préférentiellement dans l'étape (iii) (c'est-à-dire dans la totalité de l'étape (iii)), est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

De manière avantageuse, ledit acide concentré est de l'acide sulfurique concentré, c'est-à-dire de l'acide sulfurique présentant une concentration d'au moins 80 % en masse (et en général d'au plus 98 % en masse), de préférence d'au moins 90 % en masse ; en particulier, sa concentration est comprise entre 90 et 98 % en masse, par exemple entre 91 et 97 % en masse.

Selon un mode de mise en œuvre du procédé, l'acide concentré tel que défini ci-dessus est utilisé uniquement dans l'étape (iii).

L'acide utilisé dans les étapes (ii) et (iv) peut alors être par exemple un acide dilué, de manière avantageuse de l'acide sulfurique dilué, c'est-à-dire présentant une concentration très inférieure à 80 % en masse, en l'occurrence une concentration inférieure à 20 % en masse (et en général d'au moins 4 % en masse), en particulier inférieure à 14 % en masse, notamment d'au plus 10 % en masse, par exemple comprise entre 5 et 10 % en masse.

Cependant, selon une variante préférée de l'invention, l'acide utilisé dans l'étape (iv) est également un acide concentré tel que mentionné ci-dessus.

Si dans le cadre de cette variante préférée de l'invention, l'acide utilisé dans la totalité de l'étape (ii) peut alors être par exemple un acide dilué comme décrit ci-dessus, de manière avantageuse de l'acide sulfurique dilué (c'est-à-dire présentant une concentration très inférieure à 80 % en masse, en l'occurrence une concentration inférieure à 20 % en masse, en général inférieure à 14 % en masse, en particulier d'au plus 10 % en masse, par exemple comprise entre 5 et 10 % en masse), il peut être avantageux, dans cette variante de l'invention, que dans au moins une partie de l'étape (ii), en général dans une deuxième et dernière partie de cette étape (ii), l'acide utilisé soit également un acide concentré tel que mentionné ci-dessus (l'acide utilisé dans l'autre partie de l'étape (ii) étant par exemple un acide dilué comme décrit ci-dessus).

Dans le cadre de cette variante préférée de l'invention, l'acide utilisé dans la totalité de l'étape (ii) peut également être un acide concentré tel que mentionné ci-dessus, de manière avantageuse de l'acide sulfurique concentré, c'est-à-dire présentant une concentration d'au moins 80 % en masse, de préférence d'au moins 90 % en masse, en particulier comprise entre 90 et 98 % en masse. De préférence, dans le cas de cette utilisation on ajoute de l'eau dans le pied de cuve initial, en particulier soit avant l'étape (ii) soit au cours de l'étape (ii).

Dans le procédé selon l'invention, le choix de l'acide et du silicate de métal alcalin M se fait d'une manière bien connue en soi.

On utilise généralement comme acide(s) (acide concentré ou acide dilué) un acide organique tel que l'acide acétique, l'acide formique ou l'acide carbonique ou, de préférence, un acide minéral tel que l'acide sulfurique, l'acide nitrique, l'acide phosphorique ou l'acide chlorhydrique.

Si on utilise comme acide concentré de l'acide acétique concentré ou de l'acide formique concentré, alors leur concentration est d'au moins 90 % en masse.

Si on utilise comme acide concentré de l'acide nitrique concentré, alors sa concentration est d'au moins 60 % en masse.

Si on utilise comme acide concentré de l'acide phosphorique concentré, alors sa concentration est d'au moins 75 % en masse.

Si on utilise comme acide concentré de l'acide chlorhydrique concentré, alors sa concentration est d'au moins 30 % en masse.

Cependant, de manière très avantageuse, on emploie comme acide(s) un (des) acide(s) sulfurique(s), l'acide sulfurique concentré alors utilisé présentant une concentration telle que déjà mentionnée dans l'exposé ci-dessus.

En général, lorsque de l'acide concentré est utilisé dans plusieurs étapes, on emploie alors le même acide concentré.

On peut par ailleurs utiliser en tant que silicate toute forme courante de silicates tels que métasilicates, disilicates et avantageusement un silicate de métal alcalin M dans lequel M est le sodium ou le potassium.

Le silicate peut présenter une concentration (exprimée en SiO₂) comprise entre 2 et 330 g/L, par exemple entre 3 et 300 g/L, en particulier entre 4 et 260 g/L.

De manière générale, on emploie, comme silicate, le silicate de sodium.

Dans le cas où l'on utilise le silicate de sodium, celui-ci présente, en général, un rapport pondéral SiO2/Na₂O compris entre 2,5 et 4, par exemple entre 3,2 et 3,8.

Dans le procédé de préparation de l'invention, la réaction du silicate avec l'acide se fait d'une manière très spécifique selon les étapes suivantes.

On forme tout d'abord (étape (i)) un pied de cuve aqueux qui comprend du silicate.

La concentration en silicate (exprimée en SiO₂) de ce pied de cuve initial est inférieure à 20 g/L.

Cette concentration est de préférence d'au plus 15 g/L, en particulier d'au plus 11 g/L, par exemple d'au plus 8 g/L.

Le pied de cuve formé dans l'étape (i) peut éventuellement comprendre un électrolyte. Néanmoins, de préférence, aucun électrolyte n'est ajouté au cours du procédé de préparation, en particulier dans l'étape (i).

Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'acide, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.

La deuxième étape (étape (ii)) consiste à ajouter de l'acide dans le pied de cuve initial.

Ainsi, dans cette deuxième étape, on ajoute de l'acide audit pied de cuve initial jusqu'à ce qu'au moins 50 %, en particulier 50 à 99 %, de la quantité de M₂O présente dans ledit pied de cuve initial soient neutralisés.

Une fois qu'est atteinte la valeur souhaitée de quantité de M₂O neutralisé, on procède alors à une addition simultanée (étape (iii)) d'acide et d'une quantité de silicate de métal alcalin M telle que le taux de consolidation, c'est-à-dire le rapport quantité de silicate ajoutée (exprimée en SiO₂) / quantité de silicate présente dans le pied de cuve initial (exprimée en SiO₂) soit supérieur à 4 et d'au plus 100.

Selon une variante du procédé de l'invention, on procède à cette addition simultanée d'acide et d'une quantité de silicate de métal alcalin M de telle manière que le taux de consolidation soit de préférence compris entre 12 et 100, en particulier entre 12 et 50, notamment entre 13 et 40.

Selon une autre variante du procédé de l'invention, on procède à cette addition simultanée d'acide et d'une quantité de silicate de métal alcalin M de telle manière que le taux de consolidation soit plutôt supérieur à 4 et inférieur à 12, en particulier compris entre 5 et 11,5, notamment entre 7,5 et 11. Cette variante est, en général, mise en œuvre quand la concentration en silicate dans le pied de cuve initial est d'au moins 8 g/L, en particulier comprise entre 10 et 15 g/L, par exemple entre 11 et 15 g/L.

De manière préférée, pendant toute l'étape (iii), la quantité d'acide ajoutée est telle que 80 à 99 %, par exemple 85 à 97 %, de la quantité de M₂O ajoutée soient neutralisés.

Dans l'étape (iii), il est possible de procéder à l'addition simultanée d'acide et de silicate à un premier palier de pH du milieu réactionnel, pH₁, puis à un second palier de pH du milieu réactionnel, pH₂, tel que 7 < pH₂ < pH₁ < 9.

Ensuite, dans une étape (iv), on arrête l'addition du silicate tout en continuant l'addition d'acide dans le milieu réactionnel de manière à obtenir une valeur du pH du milieu réactionnel comprise entre 2,5 et 5,3 (par exemple entre 3,0 et 5,3), de préférence entre 2,8 et 5,2 (par exemple entre 4,0 et 5,2), en particulier entre 3,5 et 5,1 (voire entre 3,5 et 5,0).

On peut éventuellement effectuer juste après cette étape (iv) un mûrissement du milieu réactionnel, notamment au pH obtenu à l'issue de l'étape (iv), et en général sous agitation ; ce mûrissement peut par exemple durer de 2 à 45 minutes, en particulier de 5 à 20 minutes et ne comporte préférentiellement ni addition d'acide, ni addition de silicate.

En général, l'ensemble de la réaction (étapes (i) à (iv)) est effectué sous agitation.

Toutes les étapes (i) à (iv) sont habituellement réalisées entre 75 et 97 °C, de préférence entre 80 et 96 °C.

Selon une variante du procédé de l'invention, l'ensemble des étapes est effectué à une température constante.

Selon une autre variante du procédé de l'invention, que l'étape (ii) soit effectuée (en totalité ou en partie) ou ne soit pas effectuée avec de l'acide concentré, la température de fin de réaction est plus élevée que la température de début de réaction : ainsi, on maintient la température au début de la réaction (par exemple au cours des étapes (i) et (ii)) de préférence entre 75 et 90 °C, puis on augmente la température, de préférence jusqu'à une valeur comprise entre 90 et 97 °C, valeur à laquelle elle est maintenue (par exemple au cours des étapes (iii) et (iv)) jusqu'à la fin de la réaction.

Dans le procédé selon l'invention, on obtient, à l'issue de l'étape (iv), éventuellement suivie d'un mûrissement, une bouillie de silice qui est ensuite séparée (séparation liquide-solide).

La séparation mise en œuvre dans le procédé de préparation selon l'invention comprend habituellement une filtration, suivie d'un lavage si nécessaire. La filtration s'effectue selon toute méthode convenable, par exemple au moyen d'un filtre presse, d'un filtre à bande, d'un filtre sous vide.

La suspension de silice ainsi récupérée (gâteau de filtration) est ensuite séchée.

Ce séchage peut se faire selon tout moyen connu en soi.

De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines.

Il y a lieu de noter que le gâteau de filtration n'est pas toujours dans des conditions permettant une atomisation notamment à cause de sa viscosité élevée. D'une manière connue en soi, on soumet alors le gâteau à une opération de délitage. Cette opération peut être réalisée mécaniquement, par passage du gâteau dans un broyeur de type colloïdal ou à billes. Le délitage est généralement effectué en présence d'eau et/ou en présence d'un composé de l'aluminium, en particulier d'aluminate de sodium et, éventuellement, en présence d'un acide tel que décrit précédemment (dans ce dernier cas, le composé de l'aluminium et l'acide sont généralement ajoutés de manière simultanée). L'opération de délitage permet notamment d'abaisser la viscosité de la suspension à sécher ultérieurement.

Lorsque le séchage est effectué à l'aide d'un atomiseur à buses, la silice susceptible d'être alors obtenue se présente habituellement sous forme de billes sensiblement sphériques.

A l'issue du séchage, on peut alors procéder à une étape de broyage sur le produit récupéré. La silice qui est alors susceptible d'être obtenue se présente généralement sous forme d'une poudre.

Lorsque le séchage est effectué à l'aide d'un atomiseur à turbines, la silice susceptible d'être alors obtenue peut se présenter sous la forme d'une poudre.

Enfin, le produit séché (notamment par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel que eau, suspension de silice ...), une extrusion ou, de préférence, un compactage à sec. Lorsque l'on met en œuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier.

La silice susceptible d'être alors obtenue par cette étape d'agglomération se présente généralement sous la forme de granulés.

Les poudres, de même que les billes, de silice obtenues par le procédé selon l'invention offrent ainsi l'avantage, entre autres, d'accéder de manière simple, efficace et économique, à des granulés, notamment par des opérations classiques de mise en forme, telles que par exemple une granulation ou un compactage.

Les silices précipitées préparées par le procédé selon l'invention se présentent en général sous au moins l'une des formes suivantes : billes sensiblement sphériques, poudre, granulés.

De manière générale, le procédé selon l'invention permet d'obtenir des silices formées d'agrégats de grosses particules primaires de silice à la surface desquels se trouvent des petites particules primaires de silice présentant avantageusement les caractéristiques des silices décrites dans les brevets EP 0 670 813 et EP 0 670 814.

La mise en œuvre du procédé de préparation selon l'invention, particulièrement lorsque l'acide concentré utilisé est de l'acide sulfurique concentré, permet notamment d'obtenir au cours dudit procédé (à l'issue de l'étape (iv)) une suspension plus concentrée en silice précipitée que celle obtenue par un procédé identique utilisant uniquement de l'acide dilué, et donc un gain en productivité en silice précipitée (pouvant atteindre par exemple au moins 10 à 40 %), en particulier à la réaction de précipitation (c'est-à-dire à l'issue de l'étape (iv)), tout en s'accompagnant de manière surprenante de l'obtention de silice précipitée ayant une bonne aptitude à la dispersion (dispersibilité) dans les compositions de polymère(s) (élastomère(s)) ; de manière plus générale, les silices précipitées obtenues par le procédé selon l'invention présentent préférentiellement des caractéristiques physicochimiques et des propriétés comparables, notamment au niveau de leur distribution poreuse, de leur aptitude à la désagglomération et à la dispersion (dispersibilité) dans les compositions de polymère(s) (élastomère(s)) et/ou de leurs propriétés renforçantes, à celles des silices précipitées obtenues par un procédé identique mettant en œuvre uniquement de l'acide dilué.

De manière avantageuse, dans le même temps, notamment lorsque l'acide concentré utilisé est de l'acide sulfurique concentré, le procédé selon l'invention permet, par rapport à un procédé identique employant uniquement de l'acide dilué, un gain (pouvant atteindre par exemple au moins 15 à 60 %) sur la consommation d'énergie (sous forme de vapeur vive par exemple), en particulier à la réaction de précipitation (c'est-à-dire à l'issue de l'étape (iv)), du fait d'une diminution des quantités d'eau engagées et de l'exo-thermicité liée à l'utilisation d'acide concentré. En outre, l'utilisation d'acide concentré permet de restreindre (par exemple d'au moins 15 %) la quantité d'eau nécessaire à la réaction, notamment du fait de la diminution de la quantité d'eau utilisée pour la préparation de l'acide.

La silice précipitée préparée par le procédé selon l'invention peut être mise en œuvre dans diverses applications. Elle peut être employée par exemple comme support de catalyseur, comme absorbant de matières actives (en particulier support de liquides, notamment utilisés dans l'alimentation, tels que les vitamines (vitamine E), le chlorure de choline), dans des compositions de polymère(s), notamment d'élastomère(s), de silicone(s), comme agent viscosant, texturant ou anti-mottant, comme élément pour séparateurs de batteries, comme additif pour dentifrice, pour béton, pour papier.

Cependant, elle trouve une application particulièrement intéressante dans le renforcement des polymères, naturels ou synthétiques.

Les compositions de polymère(s) dans lesquelles les silices précipitées préparées par le procédé selon l'invention peuvent être utilisées, notamment à titre de charge renforçante, sont en général à base d'un ou plusieurs polymères ou copolymères, en particulier d'un ou plusieurs élastomères, notamment les élastomères thermoplastiques, présentant, de préférence, au moins une température de transition vitreuse comprise entre -150 et +300 °C, par exemple entre -150 et +20 °C.

A titre de polymères possibles, on peut citer les polymères diéniques, en particulier les élastomères diéniques.

On peut citer, à titre d'exemples, non limitatifs, d'articles finis à base des compositions de polymère(s) décrites précédemment les semelles de chaussures, les pneumatiques, les revêtements de sols, les barrières aux gaz, les matériaux ignifugeants et également les pièces techniques telles que les galets de téléphériques, les joints d'appareils électroménagers, les joints de conduite de liquides ou de gaz, les joints de système de freinage, les tuyaux (flexibles), les gaines (notamment les gaines de câbles), les câbles, les supports de moteur, les bandes de convoyeur et les courroies de transmissions.

## Revendications

1. Procédé de préparation de silice précipitée du type comprenant la réaction d'un silicate de métal alcalin M avec au moins un acide ce par quoi l'on obtient une suspension de silice, puis la séparation et le séchage de cette suspension, dans lequel la réaction du silicate avec l'acide est réalisée de la manière suivante :
(i) on forme un pied de cuve aqueux initial comportant du silicate de métal alcalin M, la concentration en silicate exprimée en SiO₂ dudit pied de cuve étant inférieure à 20 g/L, de préférence d'au plus 15 g/L,
(ii) on ajoute de l'acide audit pied de cuve initial, jusqu'à ce qu'au moins 50 % de la quantité de M₂O présente dans le dit pied de cuve initial soient neutralisés,
(iii) on ajoute au milieu réactionnel, simultanément, du silicate de métal alcalin M et de l'acide, de telle manière que le rapport quantité de silicate ajoutée exprimée en SiO₂ / quantité de silicate présente dans le pied de cuve initial exprimée en SiO₂ soit supérieur à 4 et d'au plus 100, de préférence soit compris entre 12 et 100, en particulier entre 12 et 50,
(iv) on arrête l'addition du silicate tout en continuant l'addition de l'acide dans le milieu réactionnel jusqu'à l'obtention d'une valeur du pH du milieu réactionnel comprise entre 2,5 et 5,3, de préférence entre 2,8 et 5,2,
procédé dans lequel, dans au moins une partie de l'étape (iii), l'acide utilisé est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

2. Procédé selon la revendication 1, dans lequel, dans au moins l'étape (iii), l'acide utilisé est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

3. Procédé selon l'une des revendications 1 et 2, **caractérisé en ce que** l'acide utilisé dans les étapes (iii) et (iv) est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

4. Procédé selon l'une des revendications 1 à 3, **caractérisé en ce que** dans une partie de l'étape (ii) l'acide utilisé est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

5. Procédé selon l'une des revendications 1 à 3 **caractérisé en ce que** l'acide utilisé dans l'étape (ii) est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

6. Procédé selon l'une des revendications 1 à 5, **caractérisé en ce que** ledit acide concentré est de l'acide sulfurique présentant une concentration d'au moins 80 % en masse, de préférence d'au moins 90 % en masse.

7. Procédé selon l'une des revendications 1 à 6, **caractérisé en ce que** ledit acide concentré est de l'acide sulfurique présentant une concentration comprise entre 90 et 98 % en masse.

8. Procédé selon l'une des revendications 1 à 7, **caractérisé en ce que** ladite concentration en silicate exprimée en SiO₂ dudit pied de cuve initial est d'au plus 11 g/L.

9. Procédé selon l'une des revendications 1 à 8, **caractérisé en ce que**, dans l'étape (iii), on ajoute au milieu réactionnel simultanément de l'acide et une quantité du silicate de métal alcalin M telle que le rapport quantité de silice ajoutée / quantité de silice présente dans le pied de cuve initial soit compris entre 12 et 50.

10. Procédé selon l'une des revendications 1 à 9, **caractérisé en ce que**, pendant toute l'étape (iii), la quantité d'acide ajoutée est telle que 80 à 99 % de la quantité de M₂O ajoutée soient neutralisés.

11. Procédé selon l'une des revendications 1 à 10, **caractérisé en ce que** ledit séchage est effectué par atomisation.

## Patentansprüche

1. Verfahren zur Herstellung von Fällungskieselsäure des Typs, bei dem man ein Silikat eines Alkalimetalls M mit mindestens einer Säure umsetzt, wodurch man eine Suspension von Kieselsäure erhält, und diese Suspension dann trennt und trocknet, wobei die Umsetzung des Silikats mit der Säure folgendermaßen durchgeführt wird:
(i) man bildet eine wässrige Vorlage, die Silikat eines Alkalimetalls M umfasst, wobei die als SiO₂ ausgedrückte Silikatkonzentration der Vorlage kleiner als 20 g/L ist und vorzugsweise höchstens 15 g/L beträgt,
(ii) man gibt Säure zu der anfänglichen Vorlage, bis mindestens 50 % der Menge von M₂O in der anfänglichen Vorlage neutralisiert sind,
(iii) man gibt gleichzeitig Silikat eines Alkalimetalls M und Säure derart zum Reaktionsmedium, dass das Verhältnis von zugesetzter Menge von Silikat, ausgedrückt als SiO₂, zur Menge an Silikat in der anfänglichen Vorlage, ausgedrückt als SiO₂, größer als 4 ist und höchstens 100 beträgt, vorzugsweise zwischen 12 und 100 und insbesondere zwischen 12 und 50 liegt,
(iv) man hört mit der Zugabe des Silikats auf und fährt gleichzeitig mit der Zugabe der Säure zum Reaktionsmedium fort, bis man einen pH-Wert des Reaktionsmediums zwischen 2,5 und 5,3, vorzugsweise zwischen 2,8 und 5,2, erhält,
wobei es sich in mindestens einen Teil von Schritt (iii) bei der verwendeten Säure um eine konzentrierte Säure aus der Gruppe bestehend aus Schwefelsäure mit einer Konzentration von mindestens 80 Massen-%, insbesondere mindestens 90 Massen-%, Essigsäure oder Ameisensäure mit einer Konzentration von mindestens 90 Massen-%, Salpetersäure mit einer Konzentration von mindestens 60 Massen-%, Phosphorsäure mit einer Konzentration von mindestens 75 Massen-% und Salzsäure mit einer Konzentration von mindestens 30 Massen-% handelt.

2. Verfahren nach Anspruch 1, bei dem es sich in mindestens Schritt (iii) bei der verwendeten Säure um eine konzentrierte Säure aus der Gruppe bestehend aus Schwefelsäure mit einer Konzentration von mindestens 80 Massen-%, insbesondere mindestens 90 Massen-%, Essigsäure oder Ameisensäure mit einer Konzentration von mindestens 90 Massen-%, Salpetersäure mit einer Konzentration von mindestens 60 Massen-%, Phosphorsäure mit einer Konzentration von mindestens 75 Massen-% und Salzsäure mit einer Konzentration von mindestens 30 Massen-% handelt.

3. Verfahren nach einem der Ansprüche 1 und 2, **dadurch gekennzeichnet, dass** es sich bei der in den Schritten (iii) und (iv) verwendeten Säure um eine konzentrierte Säure aus der Gruppe bestehend aus Schwefelsäure mit einer Konzentration von mindestens 80 Massen-%, insbesondere mindestens 90 Massen-%, Essigsäure oder Ameisensäure mit einer Konzentration von mindestens 90 Massen-%, Salpetersäure mit einer Konzentration von mindestens 60 Massen-%, Phosphorsäure mit einer Konzentration von mindestens 75 Massen-% und Salzsäure mit einer Konzentration von mindestens 30 Massen-% handelt.

4. Verfahren nach einem der Ansprüche 1 bis 3, bei dem es sich in einem Teil von Schritt (ii) bei der verwendeten Säure um eine konzentrierte Säure aus der Gruppe bestehend aus Schwefelsäure mit einer Konzentration von mindestens 80 Massen-%, insbesondere mindestens 90 Massen-%, Essigsäure oder Ameisensäure mit einer Konzentration von mindestens 90 Massen-%, Salpetersäure mit einer Konzentration von mindestens 60 Massen-%, Phosphorsäure mit einer Konzentration von mindestens 75 Massen-% und Salzsäure mit einer Konzentration von mindestens 30 Massen-% handelt.

5. Verfahren nach einem der Ansprüche 1 bis 3, bei dem es sich in Schritt (ii) bei der verwendeten Säure um eine konzentrierte Säure aus der Gruppe bestehend aus Schwefelsäure mit einer Konzentration von mindestens 80 Massen-%, insbesondere mindestens 90 Massen-%, Essigsäure oder Ameisensäure mit einer Konzentration von mindestens 90 Massen-%, Salpetersäure mit einer Konzentration von mindestens 60 Massen-%, Phosphorsäure mit einer Konzentration von mindestens 75 Massen-% und Salzsäure mit einer Konzentration von mindestens 30 Massen-% handelt.

6. Verfahren nach einem der Ansprüche 1 bis 5, **dadurch gekennzeichnet, dass** es sich bei der konzentrierten Säure um Schwefelsäure mit einer Konzentration von mindestens 80 Massen-%, vorzugsweise mindestens 90 Massen-%, handelt.

7. Verfahren nach einem der Ansprüche 1 bis 6, **dadurch gekennzeichnet, dass** es sich bei der konzentrierten Säure um Schwefelsäure mit einer Konzentration zwischen 90 und 98 Massen-% handelt.

8. Verfahren nach einem der Ansprüche 1 bis 7, **dadurch gekennzeichnet, dass** die als SiO₂ ausgedrückte Silikatkonzentration der anfänglichen Vorlage mindestens 11 g/L beträgt.

9. Verfahren nach einem der Ansprüche 1 bis 8, **dadurch gekennzeichnet, dass** man in Schritt (iii) gleichzeitig Säure und eine solche Menge an Silikat eines Alkalimetalls M zum Reaktionsmedium gibt, dass das Verhältnis von zugesetzter Menge von Silikat zur Menge an Silikat in der anfänglichen Vorlage zwischen 12 und 50 liegt.

10. Verfahren nach einem der Ansprüche 1 bis 9, **dadurch gekennzeichnet, dass** die während des gesamten Schritts (iii) zugegebene Säuremenge derart ist, dass 80 bis 99 % der Menge von M₂O neutralisiert werden.

11. Verfahren nach einem der Ansprüche 1 bis 10, **dadurch gekennzeichnet, dass** die Trocknung durch Zerstäubung durchgeführt wird.

## Claims

1. Process for preparing precipitated silica, of the type comprising the reaction of an alkali metal M silicate with at least one acid, whereby a silica suspension is obtained, followed by the separation and drying of this suspension, in which the reaction of the silicate with the acid is performed in the following manner:
(i) an initial aqueous stock comprising alkali metal M silicate is formed, the concentration of silicate expressed as SiO₂ in said stock being less than 20 g/L, preferably at most 15 g/L,
(ii) acid is added to said initial stock, until at least 50% of the amount of M₂O present in said initial stock is neutralized,
(iii) alkali metal M silicate and acid are simultaneously added to the reaction medium, such that the ratio of the amount of silicate added expressed as SiO₂/amount of silicate present in the initial stock expressed as SiO₂ is greater than 4 and at most 100, preferably between 12 and 100, in particular between 12 and 50,
(iv) the addition of the silicate is stopped while continuing the addition of the acid to the reaction medium until a pH value in the reaction medium of between 2.5 and 5.3, preferably between 2.8 and 5.2, is obtained,
in which process, in at least part of step (iii), the acid used is a concentrated acid chosen from the group consisting of sulfuric acid with a concentration of at least 80% by weight, in particular of at least 90% by weight, acetic acid or formic acid with a concentration of at least 90% by weight, nitric acid with a concentration of at least 60% by weight, phosphoric acid with a concentration of at least 75% by weight, hydrochloric acid with a concentration of at least 30% by weight.

2. Process according to Claim 1, in which, in at least step (iii), the acid used is a concentrated acid chosen from the group consisting of sulfuric acid with a concentration of at least 80% by weight, in particular of at least 90% by weight, acetic acid or formic acid with a concentration of at least 90% by weight, nitric acid with a concentration of at least 60% by weight, phosphoric acid with a concentration of at least 75% by weight, hydrochloric acid with a concentration of at least 30% by weight.

3. Process according to either of Claims 1 and 2, **characterized in that** the acid used in steps (iii) and (iv) is a concentrated acid chosen from the group consisting of sulfuric acid with a concentration of at least 80% by weight, in particular of at least 90% by weight, acetic acid or formic acid with a concentration of at least 90% by weight, nitric acid with a concentration of at least 60% by weight, phosphoric acid with a concentration of at least 75% by weight, hydrochloric acid with a concentration of at least 30% by weight.

4. Process according to one of Claims 1 to 3, **characterized in that**, in part of step (ii), the acid used is a concentrated acid chosen from the group consisting of sulfuric acid with a concentration of at least 80% by weight, in particular of at least 90% by weight, acetic acid or formic acid with a concentration of at least 90% by weight, nitric acid with a concentration of at least 60% by weight, phosphoric acid with a concentration of at least 75% by weight, hydrochloric acid with a concentration of at least 30% by weight.

5. Process according to one of Claims 1 to 3, **characterized in that** the acid used in step (ii) is a concentrated acid chosen from the group consisting of sulfuric acid with a concentration of at least 80% by weight, in particular of at least 90% by weight, acetic acid or formic acid with a concentration of at least 90% by weight, nitric acid with a concentration of at least 60% by weight, phosphoric acid with a concentration of at least 75% by weight, hydrochloric acid with a concentration of at least 30% by weight.

6. Process according to one of Claims 1 to 5, **characterized in that** said concentrated acid is sulfuric acid with a concentration of at least 80% by weight, preferably of at least 90% by weight.

7. Process according to one of Claims 1 to 6, **characterized in that** said concentrated acid is sulfuric acid with a concentration of between 90% and 98% by weight.

8. Process according to one of Claims 1 to 7, **characterized in that** said concentration of silicate expressed as SiO₂ in said initial stock is at most 11 g/L.

9. Process according to one of Claims 1 to 8, **characterized in that**, in step (iii), acid and an amount of alkali metal M silicate are simultaneously added to the reaction medium such that the ratio of the amount of silica added/amount of silica present in the initial stock is between 12 and 50.

10. Process according to one of Claims 1 to 9, **characterized in that**, in the whole of step (iii), the amount of acid added is such that 80% to 99% of the amount of M₂O added is neutralized.

11. Process according to one of Claims 1 to 10, **characterized in that** said drying is performed by atomization.
